# EUROPÄISCHE PATENTSCHRIFT

(11) **EP 0 626 046 B1**
(45) Veröffentlichungstag und Bekanntmachung des Hinweises auf die Patenterteilung: **23.04.1997**
(21) Anmeldenummer: 94900702.5
(22) Anmeldetag: 13.12.1993
(51) Int. Cl.: F16H 25/20, B66B 9/08

(54) **LINEARE VERSTELLEINRICHTUNG MIT EINER ÜBERLASTSICHERUNG, SOWIE EIN TREPPENLIFT**
LINEAR MOVING DEVICE WITH OVERLOAD PROTECTION, AND A STAIR-LIFT
DISPOSITIF A DEPLACEMENT LINEAIRE COMPORTANT UNE SECURITE ANTI-SURCHARGE, ET ASCENSEUR D'ESCALIER

(30) Priorität: 18.12.1992 CH 3871/92
(43) Veröffentlichungstag der Anmeldung: 30.11.1994
(73) Patentinhaber: RIGERT, Bernhard, CH-6415 Arth (CH)
(72) Erfinder: RIGERT, Bernhard, CH-6415 Arth (CH)
(74) Vertreter: Luchs, Willi
(86) Internationale Anmeldenummer: CH9300278
(87) Internationale Veröffentlichungsnummer: WO9415119

(56) Entgegenhaltungen:
- EP-A- 0 369 322
- EP-A- 0 412 072
- DE-A- 1 750 562
- US-A- 4 846 011

## Beschreibung

Die Erfindung betrifft eine lineare Verstelleinrichtung mit einer Überlastsicherung entsprechend den im Oberbegriff von Anspruch 1 aufgeführten Merkmalen.

Lineare Verstelleinrichtungen mit Überlastsicherungen sind quasi als fertige Maschinenelemente auf dem Markt erhältlich. Beispielsweise ist eine solche bekannt, die als Kugelgewindetrieb ausgebildet ist und eine die endlos geführten Kugeln enthaltende Mutter aufweist, die beim Drehen der Spindelwelle linear bewegt wird. Wenn eine gegen die Bewegungsrichtung der Mutter wirkende Kraft auftritt, z.B. wenn das von der Mutter bewegte Teil unvorhergesehen an einem Gegenstand anstösst, dann bleibt diese Mutter stehen. Zu diesem Zwecke ist ein Stromüberwachungssystem des Antriebes vorgesehen, bei welchem der Antrieb sofort abstellt, wenn er überlastet wird und dadurch mehr Strom braucht. Im weiteren kann ein solches Überlastmoment auch durch ansich bekannte Endschaltermechanismen aufgefangen werden, dabei der Antrieb sofort angehalten wird, wenn eine solche Überlast auftritt. Diese bestehenden Verstelleinrichtungen haben den Nachteil, als sie im konkreten Anwendungsfall, wie beispielsweise für einen Treppenlift, relativ aufwendig und daher teuer zu stehen kommen; dies gerade auch deshalb, weil darin mehrere solcher Verstelleinrichtungen eingesetzt werden müssen.

In der Druckschrift EP-A 0 369 322 ist eine gattungsgemäße lineare Verstelleinrichtung beschrieben, bei welcher ein Kupplungselement vorgesehen ist, welches zwei Zahnräder aufweist, die permanent mit einer Gewindespindel in Eingriff stehen. Das Kupplungselement wird über Bremselemente, welche die Zahnräder blockieren oder freigeben, mit der Gewindespindel gekuppelt oder entkuppelt. Der am Umfang der Zahnräder angreifende Bremsbelag dieser Kupplung ist jedoch nicht dazu ausgelegt, als Rutschkupplung zu dienen, denn bei einem Reibkontakt würde durch die annähernd linienförmige Berührung zwischen dem Bremsbelag und den Zahnrädern eine zu schnelle Abnützung entstehen. Auch die Feder dieses Kupplungselementes übt in der Ausgangsstellung über die Bremselemente eine derartige Kraft auf die Zahnräder aus, dass letztere blockieren. Es ist nicht vorgesehen, dass die Federn eine derartige Druckkraft auf die Bremselemente ausüben, dass ein definierter Anpressdruck entsteht, um diese Kupplung als Überlastsicherung vorzusehen.

Bei einer Anordnung gemäss der Druckschrift DE-A 17 50 562 ist eine Übertragung einer Drehbewegung in eine lineare Bewegung gelehrt, bei der Schneckenräder in einem drehbaren Rotor angeordnet sind, welcher nicht längsverschiebbar ist. Die Schneckenräder stehen dabei mit einer achsial verschiebbaren Gewindespindel in Eingriff. Diesen Schneckenrädern sind überdies Fliehgewichte 7 zugeordnet, welche sich bei Drehung des Rotors nach aussen bewegen und in der Folge die Schneckenräder blockieren, wodurch die Gewindespindel in Längsrichtung verschoben wird. Es fehlt bei diesem Blockieren ein definierter Anpressdruck, da die Fliehgewichte je nach Drehzahl eine unterschiedliche Bremskraft auf die Schneckenräder erzeugen. Zudem wird nicht der die Schneckenräder tragende Rotor, sondern die Gewindespindel bewegt.

Der vorliegenden Erfindung liegt daher die Aufgabe zugrunde, eine lineare Verstelleinrichtung nach der eingangs beschriebenen Gattung zu schaffen, die aus einer einfachen und soliden Konstruktion besteht, billig herstellbar ist und mit ihr überdies ein absolut sicheres Betreiben gewährleistet ist.

Die Aufgabe ist erfindungsgemäss durch die Merkmale des Anspruchs 1 gelöst.

Damit ist eine Verstelleinrichtung geschaffen worden, die einerseits durch ihre stabile Bauweise sehr betriebssicher und störungsfrei läuft, wie dies beispielsweise im Anwendungsfall für einen Treppenlift als absolute Voraussetzung der Fall sein muss und andererseits lässt sich diese erfindungsgemässe Verstelleinrichtung sehr billig herstellen und es wird mit ihr damit wiederum bezogen auf einen Treppenlift ermöglicht, dass dieser trotz zwei oder mehr solcher enthaltender Verstelleinrichtungen als Ganzes nicht teurer wird.

Als weiterer wesentlicher Vorteil wird mit dieser Verstelleinrichtung nach der Erfindung eine sehr niedrige Bauhöhe erzielt, was sich wiederum bei deren Einbau in einen Treppenlift sehr günstig auswirkt, denn dessen Plattform wie auch dessen Trägerwand können in ihrer Dicke dadurch minimal gehalten werden. Die geringe Bauhöhe wird primär dadurch erreicht, als die Schneckenräder zusammen mit der Längsachse der Spindelwelle eine Ebene bilden, derweil deren Drehachsen auf einer senkrecht zur Längsachse der Spindelwelle befindlichen Ebene liegen sollen.

Für die Überlastsicherung ist beiden Schneckenrädern je eine Rutschkupplung zugeordnet. Damit ist die obgenannte Aufgabe insgesamt in idealer Weise gelöst.

Ein Ausführungsbeispiel und weitere Vorteile einer erfindungsgemässen linearen Verstelleinrichtung sowie eines Treppenliftes sind anhand der Zeichnung näher erläutert. Es zeigt:
- Fig.1: eine Seitenansicht einer erfindungsgemässen linearen Verstelleinrichtung,
- Fig.2: einen Querschnitt der Verstelleinrichtung nach der Linie II-II der Fig.1,
- Fig.3: einen Treppenlift mit in diesem angeordneten Verstelleinrichtungen in schematischer perspektivischer Darstellung,
- Fig.4: eine Vorderansicht des Treppenliftes mit Veranschaulichung seiner aufgeschnittenen Trägerwand und
- Fig.5: eine Draufsicht auf die Plattform des Treppenliftes mit Veranschaulichung des in der Plattform integrierten Antriebes.

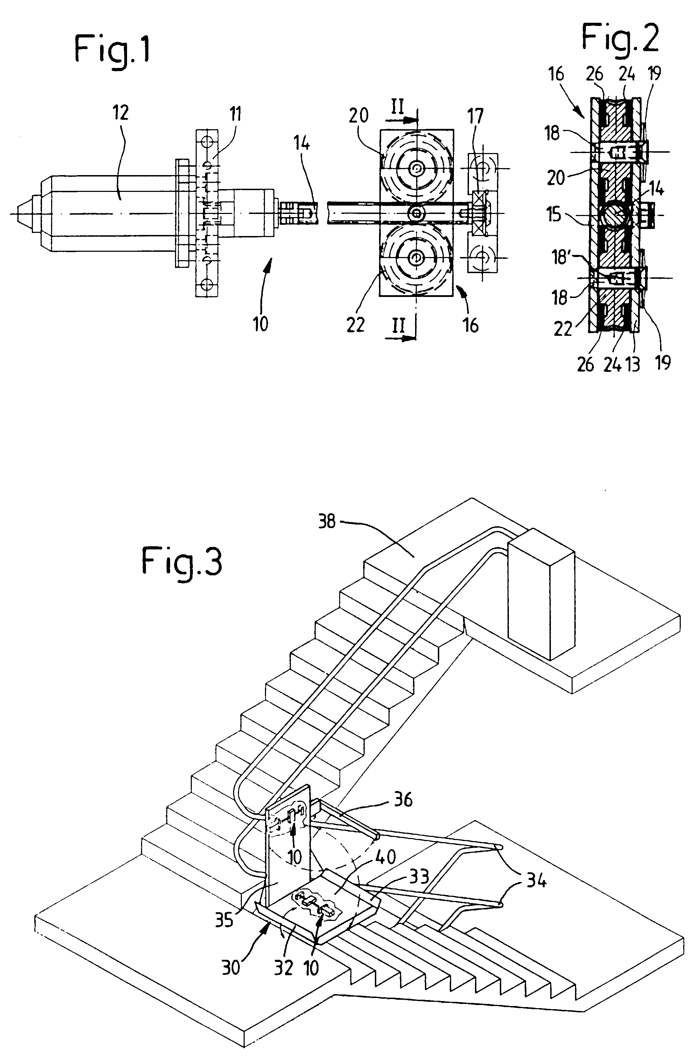

Die in Fig.1 gezeigte lineare Verstelleinrichtung 10 umfasst im wesentlichen einen Drehantrieb 12, eine mit diesem drehverbundene Spindelwelle 14, zwei zu letzterer gegenüberliegend in Eingriff stehenden Schneckenrädern 20, 22 und einem diese drehbar lagernden Schlitten 16, wobei die Schneckenräder 20,22 zusammen mit der Längsachse der Spindelwelle 14 eine Ebene bilden, derweil deren Drehachsen auf einer senkrecht zur Längsachse der Spindelwelle 14 befindlichen Ebene liegen. Dadurch heben sich die von den Schneckenrädern senkrecht auf die Spindelwelle wirkenden Reaktionskräfte praktisch auf, wenn die Schneckenräder 20, 22 beim Drehen der Spindelwelle 14 entlang dieser verschoben werden. Beim Drehantrieb 12 handelt es sich üblicherweise um einen Elektromotor, der mit einer konstanten Drehzahl angesteuert werden kann; im Prinzip aber auch derart ausgebildet sein könnte, dass er stufenlos oder mit einigen verschiedenen Drehzahlen antreibbar wäre. Die Spindelwelle 14 ihrerseits ist am einen Ende mit der Anriebswelle des Drehantriebes 12 auf bekannte Art gekoppelt und am anderen Ende vorteilhaft in einer Lagerung 17 geführt.

Gemäss Fig.2 weist der Schlitten 16 beidseitig zu der Spindelwelle 14 je eine diese umgebende Gehäusewandung 13, 15 auf, welche von zwei die Schneckenräder 20, 22 drehbar positionierenden Lagerzapfen 18 parallel zueinander gehalten sind. Die zwischen den Gehäusewandungen 13, 15 an sich drehfesten Schneckenräder 20, 22 sind an deren Stirnseiten von je einer Reibungsscheibe 24, 26 umgeben, welche in Kontakt mit dem Innern der Gehäusewandung 13, 15 stehen. Als Tellerfedern ausgebildete Federelemente 19 werden von einer im jeweiligen Lagerzapfen 18 eingeschraubten Schraube 18' gegen die eine Gehäusewandung 13 gepresst. Mittels eines Drehmomentenschlüssels oder dergleichen kann mit der Schraube 18' über diese Federelemente 19 ein bestimmte Klemmkraft auf die Schneckenräder erzeugt werden, wodurch eine Überlastsicherung in der Art einer Rutschkupplung geschaffen ist. Vorteilhaft sind die Klemmkräfte für beide Schneckenräder 20, 22 mit gleicher Grösse eingestellt.

Im normalen Betrieb sind die Schneckenräder 20, 22 im Schlitten 16 blockiert und drehen sich nicht. Infolgedessen bewegen sich diese entlang der sich drehenden Spindelwelle 14. Sobald eine auf den Schlitten 16 entgegen seiner Bewegungsrichtung wirkende Gegenkraft dermassen auftritt, dass die von den Rutschkupplungen entgegenwirkenden Reibmomente übertroffen werden, beginnen sich die Schneckenräder im Schlitten zu drehen, welcher sodann einen Stillstand erfährt.

Die vorliegende Erfindung ist mit diesem oben näher beschriebenen Ausführungsbeispiel ausreichend geoffenbart. Selbstverständlich liesse sich diese Verstelleinrichtung 10 in anderen Varianten darstellen. So könnte zum Beispiel anstelle einer oben näher beschriebenen Rutschkupplung eine mit konischen Reibflächen oder eine, bei der unter Federdruck stehende Kugeln als Mitnahmeglied dienen würden, vorgesehen sein.

Diese Verstelleinrichtung 10 wird nun an seinem dem Antrieb 12 zugeordneten Flansch 11 in einem Gehäuse oder ähnlichem befestigt. Mittels eines nicht näher dargestellten Bedienungsknopfes wird der Antrieb 12 angesteuert, der die Spindelwelle 14 in die eine oder andere Richtung dreht und somit der Schlitten 16 und ein mit ihm gekoppeltes Glied längsverschoben oder bei Zwischenschaltung eines Kurvenhebels verschwenkt oder gedreht wird. Wenn nun dieses Glied ungewollt irgendwo ansteht, so wird mit der bei den Schneckenrädern vorgesehenen Rutschkupplungen erreicht, dass der Schlitten und infolgedessen das Glied stehenbleibt, währenddem die Spindelwelle und die mit ihr in Eingriff stehenden Schneckenräder drehen, ohne dass die Verstelleinrichtung defekt erleiden würde. Das durch die Federelemente einstellbare Drehmoment, bei dem die Schneckenräder im Schlitten zu drehen beginnen, hängt von der konkreten Anwendung ab.

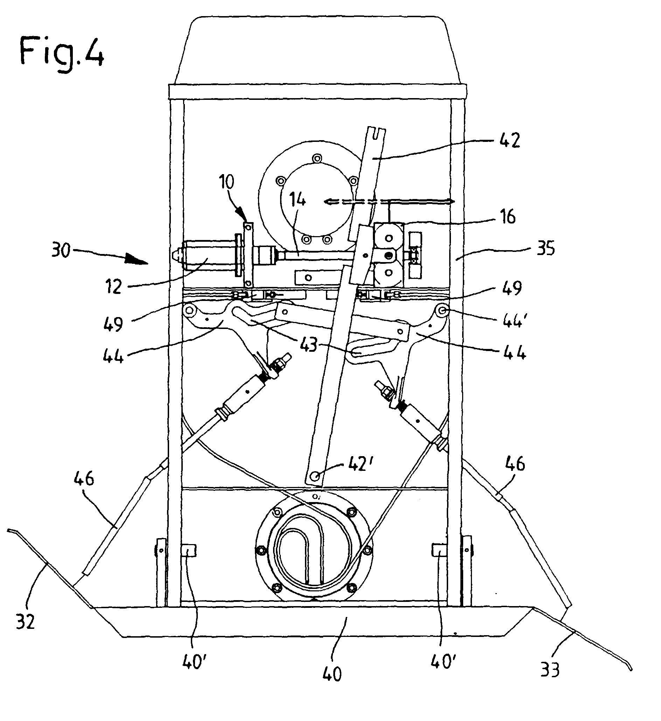

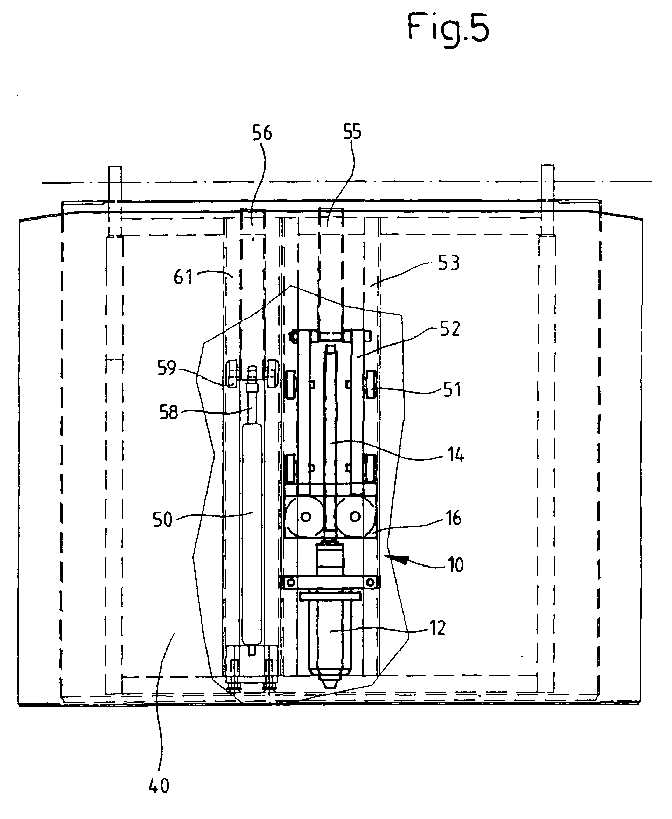

Eine solche erfindungsgemässe Verstelleinrichtung 10 eignet sich für verschiedenartigste gewerbliche Anwendungsmöglichkeiten. Ganz besonders ist sie aber aufgrund der sich mit ihr ergebenden schmalen Bauweise für Treppenlifte 30 geeignet, wie dies in Fig.3 schematisch veranschaulicht ist. Bei einem solchen Treppenlift 30, der sich hauptsächlich aus einer Plattform 40 mit beidseitig aufklappbaren Auffahrrampen 32, 33 und einer an Fahrrohren 34 geführten Rückwand 35 zusammensetzt, sind darin mindestens zwei Verstelleinrichtungen 10 fest montiert, deren genaue Funktonsweise nachfolgend in Fig.4 und Fig.5 näher erläutert ist. Ferner ist an der Rückwand 35 eine ebenfalls mit einer Verstelleinrichtung 10 einklappbaren Sicherheitsschranke 36 vorgesehen. Zudem kann auch die Plattform 40 mittels der in ihr montierten Verstelleinrichtung bei Nichtgebrauch hochgeklappt werden. Jedenfalls lässt sich dieser Treppenlift 30 so benützen, als eine Person mit einem Rollstuhl bspw. in der obersten Treppenposition 38 bei heruntergeklappter Auffahrrampe 32 darauf fährt, dann diese Auffahrrampe 32 wieder hochklappt und in der Folge der Treppenlift 30 mittels einem von der Person zu betätigenden elektrischen Bedienungshebel entlang den Fahrrohren 34, die gleichfalls als Treppengeländer dienen, hinunterbewegt wird. Solche Treppenlifte 30 sind an sich bekannt und es sind hierbei nicht mehr sämtliche Details erwähnt.

Fig.4 zeigt das Innere der Rückwand 35 des Treppenliftes 30. Die eine erfindungsgemässe lineare Verstelleinrichtung 10 ist dabei im oberen Teil dieser Rückwand 35 in annähernd horizontaler Richtung befestigt. In der gezeigten Stellung ist deren Schlitten 16 bis zum Ende der Spindelwelle 14 ausgefahren. Er bewirkt, dass der mit ihm gelenkig verbundene, am unteren Ende der Rückwand 35 schwenkbar gelagerte Kreuzhebel 42 in seine rechte Endposition gedreht ist. Die mit diesem über jeweils eine Führungsbahn 43 in Lenkverbindung stehenden Kurvenhebel 44 und die von letzteren gelenkig gehaltenen Übertragungsgestänge 46 bewirken, dass die eine an dem jeweiligen Übertragungsgestänge 46 befestigte Auffahrrampe 32 hoch-, während die andere Auffahrrampe 33 heruntergeklappt ist. Die Kurvenhebel 44 sind dabei mit ihrem äusseren Ende 44' innerhalb der Rückwand 35 drehbar gelagert. Wird nun über einen nicht dargestellten Betätigungshebel der Antrieb 12 so angesteuert, dass der Schlitten 16 gegen den Antrieb hin bewegt wird, und zwar bis der Kreuzhebel 42 annähernd vertikal steht, so sind beide Auffahrrampen 32, 33 hochgeklappt. In dieser Stellung ist ein auf die horizontal angeordnete Plattform 40 gefahrener Rollstuhl insofern gesichert, als dieser beim Bewegen des Treppenliftes 30 nicht seitlich wegfahren kann Wenn der Treppenlift seine Endposition erreicht hat, wird die mit ihm beförderte Person den Betätigungshebel in dem Sinne bedienen, als dass dann die andere Auffahrrampe 32 heruntergeklappt wird und er dann mit dem Rollstuhl wegfahren kann. Die ganze Steuerung des Treppenliftes kann so automatisiert sein, dass ähnlich wie bei einem Aufzug ein Knopfdruck des Benützers genügt, um ihn von einer Etage in eine andere zu transportieren. Parallel zur Verstelleinrichtung vorgesehene Verriegelungselemente 49 dienen zur Verriegelung des Kreuzhebels 42 in der Mittenstellung von letzterem; in dieser Stellung wichtig ist, dass ein auf dem Treppenlift befindliche Person nicht die eine oder andere Auffahrrampe herunterklappen kann. Diese sich hinter dem Kreuzhebel 42 erstreckenden Verriegelungselemente 49 werden beim Verriegeln vorwährend sie beim Entriegeln wieder aus der Bewegungsbahn des Kreuzhebels 42 zurückgeschoben werden, wobei diese Entriegelung bei Erreichen des Treppenliftes in einer Endposition über einen nicht näher dargestellten Schalter automatisch bewirkt wird. Im Übrigen ist die Plattform 40 mittels Drehachsen 40' an der Rückwand 35 hochklappbar drehgelagert.

Die in Fig.5 dargestellte heruntergeklappte Plattform 40 des Treppenliftes 30 wird im Normalfall automatisch hochgeklappt, wenn sich kein Benützer darauf befindet. Dazu ist in ihr eine lineare Verstelleinrichtung 10 und eine zu dieser parallel angeordneten Gasdruckfeder 50 integriert. Die Verstelleinrichtung 10 entspricht derjenigen nach der Fig.1 und sie ist nachstehend daher nur gerade in den unterschiedlichen Bestandteilen beschrieben. In der gezeigten Stellung ist der Schlitten 16 gegen den Antrieb 12 hin bewegt. Er weist einen Wagen 52 mit in Führungen 53 gleitenden Rollen 51 auf. Ein an der Frontseite des Wagens 52 und ein an der Gasdruckfeder 50 jeweils vorgesehenes und in der Plattform 40 geführtes Verbindungsrohr 55, 56 ist drehbar an der Rückwand 35 gehalten. Zum Hochklappen der Plattform 40 werden der Schlitten 16 von der Spindelwelle 14 und damit die Verbindungsrohre 55, 56 entlang den Führungen 53 gegen die Rückwand 35 hin bewegt. Dadurch entsteht aufgrund des Hebelarmes zwischen der von der Verstelleinrichtung 10 bewirkten Kraftlinie zu den Drehachsen 40' ein Drehmoment, mit welchem die notwendige Kraft zum Zuklappen der Plattform 40 erzeugt wird, wobei die Gasdruckfeder 50 eine zusätzliche Kraftunterstützung bietet. Letztere ist dabei auch einerseits an der Plattform 40 befestigt und andererseits mit ihrer Kolbenstange 58 an das Verbindungsrohr 56 angelenkt. Die Kolbenstange 58 hat seitlich Rollen 59, welche in Führungen 61 der Plattform 40 enthalten sind.

Für die vorliegende Erfindung ist - wie bereits oben ausführlich erläutert worden ist - diese neuartige lineare Verstelleinrichtung von entscheidender Bedeutung. Diese ist einerseits sehr einfach und damit billig gebaut, andererseits bildet sie eine absolut solide Konstruktion, vermittels derer ein einwandfreies und den Sicherheitsanforderungen in jeder Beziehung gerecht werdendes Funktionieren derselben gewährleistet ist. Bei Treppenliften kann es vorkommen, dass zum Beispiel die eine oder andere Auffahrrampe 32, 33 beim Bewegen aus Unvorsichtigkeit plötzlich irgendwo ansteht und dann diese lineare Verstelleinrichtung durch die eingebaute Überlastsicherung verhindert, dass die betroffene Auffahrrampe selbst oder ein diese stossendes oder ziehendes Teil verbogen oder sogar gebrochen wird.

Selbstverständlich wären anstelle der oben beschriebenen Verstelleinrichtung noch andere ähnliche Varianten denkbar. So könnte beispielsweise für die Rutschkupplungen nur ein auf beide wirkendes Federelement vorgesehen sein.

## Patentansprüche

1. Lineare Verstelleinrichtung mit einer Überlastsicherung, bestehend aus einem steuerbaren Antrieb (12), einer mit diesem drehverbundenen Spindelwelle (14), *wenigstens* aus zwei beidseitig zur Spindelwelle angeordneten und mit dieser in Eingriff stehenden Zahnrädern (20, 22), sowie aus einem die Zahnräder aufnehmenden, linear beweglichen längsgeführten Schlitten (16), in welchem die Zahnräder über Lagerzapfen (18) gelagert sind, wobei die Überlastsicherung *eine oder zwei* beiden Zahnrädern zugeordnete Reibungsscheibe(n) (24, 26) *aufweist*, die über ein Federelement mit einem Anpreßdruck an die Zahnräder gedrückt *wird(werden)*, so daß für den Linearbetrieb die Zahnräder drehfest im Schlitten gelagert sind,
dadurch gekennzeichnet,
daß die Zahnräder als Schneckenräder (20, 22) ausgebildet sind, und daß die Reibungsscheibe von dem Federelement (19), dessen Druckkraft einstellbar ist, mit definiertem Anpreßdruck an eine Stirnseite eines jeden Schneckenrades gedrückt wird, so daß bei Auftreten eines Überlastmomentes sich die Schneckenräder drehen und einen Stillstand des Schlittens bewirken.

2. Lineare Verstelleinrichtung nach Anspruch 1, bei der die Schneckenräder mit der Längsachse der Spindelwelle eine Ebene bilden und bei der die Drehachsen der Schneckenräder auf einer zur Längsachse der Spindelwelle senkrechten Ebene liegen.

3. Lineare Verstelleinrichtung nach Anspruch 1 oder 2, bei der jedem Schneckenrad ein einstellbares Federelement (19) zugeordnet ist.

4. Lineare Verstelleinrichtung nach Anspruch 3, bei der auf der anderen Stirnseite der Schneckenräder eine weitere Reibungssscheibe (26) angeordnet ist, und bei der in jedem ein Schneckenrad tragenden Lagerzapfen (18) eine Schraube (18') einstellbar eingeschraubt ist, die über das zugehörige Federelement (19) den definierten Anpreßdruck für die Reibungsscheiben erzeugt.

5. Treppenlift mit mindestens einer linearen Verstelleinrichtung nach einem der Ansprüche 1 bis 4, welcher eine Plattform (40) mit beidseitig verstellbaren Auffahrrampen (32,33) sowie eine Rückwand (35) aufweist, dadurch gekennzeichnet, dass für das Auf- bzw. Zuklappen der Auffahrrampen (32,33) die Verstelleinrichtung (10) in der Rückwand (35) eingebaut ist.

6. Treppenlift nach Anspruch 5, dadurch gekennzeichnet, dass die Verstelleinrichtung (10) in dieser Rückwand (35) in annähernd horizontaler Richtung befestigt ist und deren Schlitten (16) mit einem am unteren Ende der Rückwand (35) schwenkbar gelagerten Kreuzhebel (42) gelenkig verbunden ist, welcher über eine Führungsbahn (43) mit beidseitig je einem Kurvenhebel (44) in Lenkverbindung steht, wobei ein von letzterem gehaltenes Übertragungsgestänge (46) bewirkt, dass die an dem Übertragungsgestänge (46) befestigte Auffahrrampe (32) hoch- oder heruntergeklappt wird.

7. Treppenlift nach Anspruch 6, dadurch gekennzeichnet, dass der am unteren Ende der Rückwand (35) schwenkbar gelagerte und an seinem oberen Ende am Schlitten (16) angelenkte Kreuzhebel (42) derart angeordnet ist, dass in seiner vertikalen Stellung der ihm zugehörige Schlitten (16) in Längsrichtung zu der Spindelwelle (14) gesehen sich in deren Mitte befindet und dabei die zu seiner linken bzw. rechten Seite angeordneten Auffahrrampen (32,33) hochgeklappt sind, und dass der Kreuzhebel (42) davon ausgehend in die eine oder andere Endstellung der Spindelwelle (14) schwenkbar ist, wobei über die Kurvenhebel (44) und die in ihnen vorgesehenen und den Kreuzhebel (42) leitenden Führungsbahnen (43) ein Herunterklappen der entsprechenden Auffahrrampe (32,33) bewirkt wird.

8. Treppenlift nach Anspruch 7, dadurch gekennzeichnet, dass dem Kreuzhebel (42) Verriegelungselemente (49) zugeordnet sind, welche den Kreuzhebel (42) gegen Verschiebung sichern, wenn beide Auffahrrampen (32,33) hochgeklappt sind.

9. Treppenlift mit mindestens einer linearen Verstelleinrichtung nach einem der Ansprüche 1 bis 4, welcher eine Plattform (40) mit beidseitig verstellbaren Auffahrrampen (32, 33) sowie eine Rückwand (35) aufweist, wobei die Plattform (40) an der Rückwand (35) angelenkt ist und zu dieser auf- bzw. zugeklappt werden kann, dadurch gekennzeichnet, dass für das Auf- bzw. Zuklappen der Plattform (40) an der Rückwand (35) die Verstelleinrichtung (10) vorgesehen ist.

10. Treppenlift nach Anspruch 9, dadurch gekennzeichnet, dass in der Plattform (40) für deren Auf- und Zuklappung die Verstelleinrichtung (10) und eine letztere unterstützende Gasdruckfeder (50) integriert ist, welche jeweils an der Rückwand (35) schwenkbar gelagert sind und beim Verschieben vom Schlitten (16) der Verstelleinrichtung und einer Kolbenstange (58) der Gasdruckfeder (50) ein Hoch- oder Herunterklappen der an der Rückwand (35) schwenkbar gelagerten Plattform (40) bewirken.

## Claims

1. A linear moving device with overload protection, comprising a controllable drive (12), a spindle shaft (14) rotatably connected therewith, at least two gears (20, 22) arranged either side of the spindle shaft and engaged therewith, and a linearly movable, longitudinally guided carriage (16), which accommodates the gears and in which the gears are mounted via bearing journals (18), the overload protection comprising one or two friction discs (24, 26), which is/are associated with both gears and are pressed by means of a spring element with a contact pressure against the gears, so that for linear operation the gears are rotationally rigidly mounted in the carriage, characterised in that the gears are constructed as worm gears (20, 22), and the friction disc is pressed by the spring element (19), whose contact force is adjustable, against one end face of each worm gear with a defined contact pressure, so that in the presence of an overload moment the worm gears rotate causing the carriage to be stationary.

2. A linear moving device according to claim 1, in which the worm gears form a plane with the longitudinal axis of the spindle shaft and in which the rotational axes of the worm gears lie on a plane perpendicular to the longitudinal axis of the spindle shaft.

3. A linear moving device according to claim 1 or 2, in which an adjustable spring element (19) is associated with each worm gear.

4. A linear moving device according to claim 3, in which a further friction disc (26) is arranged at the other end face of the worm gears, and in which a screw (18') is adjustably screwed into each bearing journal (18) carrying a worm gear, the screw (18') generating the defined contact pressure for the friction discs via the associated spring element (19).

5. A stair lift with at least one linear moving device according to one of claims 1 to 4, which comprises a platform (40) with adjustable ramps (32, 33) on both sides and a rear wall (35), characterised in that the moving device (10) is fitted in the rear wall (35) for the upward or inward folding of the ramps (32, 33).

6. A stair lift according to claim 5, characterised in that the moving device (10) is secured in said rear wall (35) approximately in the horizontal direction and its carriage (16) is articulatedly connected to a cross lever (42) pivotably mounted at the lower end of the rear wall (35), the cross lever (42) having a steering connection via a guide track (43) with a cam lever (44) on each side, a transmission rod system (46) supported by the cam lever causing the ramp (32) secured to the transmission rod system (46) to be folded upwards or downwards.

7. A stair lift according to claim 6, characterised in that the cross lever (42), which is pivotably mounted at the lower end of the rear wall (35) and is articulatedly connected at its upper end to the carriage (16), is arranged in such a manner that, in its vertical position, the carriage (16) which is associated with the cross lever (42) is located in the centre of said cross lever (42), viewed in the longitudinal direction of the spindle shaft (14), and the ramps (32, 33) arranged on the left and right-hand sides of the cross lever (42) are folded upwards, and, proceeding from this position, the cross lever (42) can be pivoted into one or the other end position of the spindle shaft (14), a folding downwards of the corresponding ramps (32, 33) being effected by means of the cam levers (44) and the guide tracks (43) provided in the cam levers and guiding the cross lever (42).

8. A stair lift according to claim 7, characterised in that locking elements (49) are associated with the cross lever (42) and secure the cross lever (42) against displacement when both ramps (32, 33) are folded upwards.

9. A stair lift with at least one linear moving device according to one of claims 1 to 4, which comprises a platform (40) with adjustable ramps (32, 33) on both sides and a rear wall (35), the platform (40) being articulatedly connected to the rear wall (35) and being foldable upwards or inwards towards the rear wall, characterised in that the moving device (10) is provided on the rear wall (35) for the upward or inward folding of the platform (40).

10. A stair lift according to claim 9, characterised in that, for the upward and inward folding of the platform (40), the moving device (10) and a gas pressure spring (50) supporting the moving device (10) are integrated in the platform (40), both being pivotably mounted on the rear wall (35) and during displacement an upward or downward folding of the platform (40) pivotably mounted on the rear wall (35) being effected by the carriage (16) of the moving device and a piston rod (58) of the gas pressure spring (50).

## Revendications

1. Dispositif de déplacement linéaire avec une protection contre les surcharges, constitué d'une commande pouvant être pilotée (12) ; d'une broche (14) reliée en rotation à cette dernière ; d'au moins deux roues dentées (20, 22), disposées des deux côtés de la broche et en prise avec cette dernière ; ainsi que d'un coulisseau (16), qui loge les roues dentées, guidé longitudinalement selon un déplacement linéaire, coulisseau dans lequel les roues dentées sont logées par l'intermédiaire de tourillons (18) ; la protection contre les surcharges comportant un ou plusieurs disques de frottement (24, 26), affectés à l'une des deux roues dentées, ou aux deux, disques qui, par l'intermédiaire d'un élément de ressort, sont comprimés avec une certaine pression d'appui contre les roues dentées, de façon que les roues dentées, en marche linéaire, soient logées fixes en rotation dans le coulisseau ; caractérisé en ce que les roues dentées sont conçues comme des roues à vis sans fin (20, 22), et que le disque de frottement est, par l'élément de ressort (19), dont la force de compression est réglable, comprimé sous une force d'appui prédéfinie contre une face frontale de chacune des roues à vis sans fin, de sorte que, lors de l'apparition d'un moment de surcharge, les roues à vis sans fin tournent et provoquent un arrêt du coulisseau.

2. Dispositif de déplacement linéaire selon la revendication 1, dans lequel les roues à vis sans fin forment un plan avec l'axe longitudinal de la broche, et dans lequel les axes de rotation des roues à vis sans fin se trouvent sur un plan perpendiculaire à l'axe longitudinal de la broche.

3. Dispositif de déplacement linéaire selon la revendication 1 ou 2, dans lequel un élément de ressort réglable (19) est affecté à chaque roue à vis sans fin.

4. Dispositif de déplacement linéaire selon la revendication 3, dans lequel un autre disque de frottement (26) est disposé sur l'autre face frontale des roues à vis sans fin, et dans lequel une vis (18') est vissée d'une manière réglable dans chaque tourillon (18) portant une roue à vis sans fin, vis qui, par l'intermédiaire de l'élément de ressort (19) correspondant, produit la pression d'appui prédéfinie pour les disques de frottement.

5. Ascenseur d'escalier comportant au moins un dispositif de déplacement linéaire selon l'une des revendications 1 à 4, qui comporte une plate-forme (40), avec des rebords (32, 33), réglables sur les deux côtés, ainsi qu'un dossier (35), caractérisé en ce que, pour relever et rabattre les rebords (32, 33), on a incorporé un dispositif de déplacement (10) dans le dossier (35).

6. Ascenseur d'escalier selon la revendication 5, caractérisé en ce que le dispositif de déplacement (10) est fixé dans ce dossier (35) dans une direction approximativement horizontale, et son coulisseau (16) est relié en articulation à un levier croisé (42) logé en pivotement contre l'extrémité inférieure du dossier (35), levier croisé qui, par l'intermédiaire d'une glissière de guidage (43), est en liaison d'articulation avec un levier courbe (44) de chaque côté, une tringlerie de transmission (46), maintenue dans ce levier, agissant de façon à relever ou rabattre le rebord (32) fixé à la tringlerie de transmission (46).

7. Ascenseur d'escalier selon la revendication 6, caractérisé en ce que le levier croisé (42), logé en pivotement contre l'extrémité inférieure du dossier (35) et articulé en son extrémité supérieure au coulisseau (16) est disposé de telle sorte que, quand il est en position verticale, le coulisseau (16) qui lui correspond se trouve en son milieu quand on regarde dans la direction longitudinale vers la broche (14), et de ce fait les rebords (32, 33), disposés contre son côté gauche et son côté droit, sont relevés ; et que le levier croisé (42) peut, en partant de cette position, pivoter pour arriver dans l'une ou l'autre des positions finales de la broche (14), un rabattement du rebord correspondant (32, 33) étant réalisé par l'intermédiaire des leviers courbes (44) et des glissières de guidage (43), prévues dans ces derniers et guidant le levier croisé (42).

8. Ascenseur d'escalier selon la revendication 7, caractérisé en ce qu'au levier croisé (42) sont affectés des éléments de verrouillage (49), qui assurent le levier croisé (42) contre une translation quand les deux rebords (32, 33) sont relevés.

9. Ascenseur d'escalier avec au moins un dispositif de déplacement linéaire selon l'une des revendications 1 à 4, qui comporte une plate-forme (40) avec des rebords (32, 33), réglables et disposés des deux côtés, ainsi qu'un dossier (35), la plate-forme (40) étant articulée au dossier (35) et pouvant être relevée ou rabattue vers ce dernier, caractérisé en ce que le dispositif de déplacement (10) est prévu, contre le dossier (35), pour relever ou rabattre la plate-forme (40).

10. Ascenseur d'escalier selon la revendication 9, caractérisé en ce que, dans la plate-forme (40), pour son relèvement et son rabattement, sont intégrés le dispositif de déplacement (10) et un ressort de compression à gaz (50), qui soutient ce dernier, lesquels sont chacun logés en pivotement contre le dossier (35) et, lors d'une translation du coulisseau (16) du dispositif de déplacement et d'une tige de piston (58) du ressort de compression à gaz (50), provoquent un relèvement ou un rabattement de la plate-forme (40), logée en pivotement contre le dossier (35).
